# EUROPEAN PATENT SPECIFICATION

(11) **EP 0 551 958 B1**
(45) Date of publication and mention of the grant of the patent: **23.07.1997**
(21) Application number: 93200105.0
(22) Date of filing: 15.01.1993
(51) Int. Cl.: A01J 7/00

(54) **An implement for milking animals**
Vorrichtung zum Melken von Tieren
Dispositif pour la traite d'animaux

(30) Priority: 17.01.1992 NL 9200091
(43) Date of publication of application: 21.07.1993
(73) Proprietor: C. van der Lely N.V., NL-3155 PD Maasland (NL)
(72) Inventor: van der Lely, Cornelis, CH-6300 Zug (CH); van der Lely, Ary, NL-3155 PD Maasland (NL)
(74) Representative: Mulder, Herman

(56) References cited:
- EP-A- 0 182 654
- EP-A- 0 300 582
- EP-A- 0 360 354
- FR-A- 1 524 568
- US-A- 3 726 252

## Description

The invention relates to an implement for automatically milking animals, comprising a milking robot with a carrier member adapted to carry four teat cups which are automatically connectable to the teats of an animal.

Such an implement is known from EP-A-0 300 582. In the implement described in this document the carrier member consists of two parts, shiftable to each other in the longitudinal direction of said carrier member. The milk hoses connected to the teat cups are hanging under the first part and are subsequently led through the second part of said carrier member. Also, this measure forms to some extent a prevention against kicking at or on the milk hoses and kicking down the teat cups when they are connected to the animal's teats, it has the consequence that at least part of the milk hoses may be moved over the ground, when the carrier member is in a lowermost position. The invention aims to obviate or at least to mitigate this disadvantage.

Therefore, in accordance with the invention, the implement as described in the opening paragraph is characterized in that the carrier member comprises a separate chamber inside which substantially over the length of the carrier member milk hoses connected to said teat cups are mounted.

For a better understanding of the invention and to show how the same may be carried into effect, reference will now be made, by way of example, to the accompanying drawings, in which:
Figure 1 is a plan view of a milking parlour comprising a milking robot, in which the outlines of an animal, in the present case a cow, are shown;
Figure 2 is a view of the milking robot, taken in the direction of arrow II-II in Figure 1;
Figure 3 is a plan view of an enlarged part of the robot arm, on which the teat cups are disposed;
Figure 4 is a side view, taken in the direction of arrow IV in Figure 3;
Figure 5 is a plan view in accordance with Figure 3, in which is schematically shown the position of the teat cups relative to the robot arm and their connection thereto during milking of an animal;
Figure 6 is a side view, taken in the direction of arrow VI in Figure 5;
Figure 7 is a cross-sectional view, taken on line VII-VII in Figure 3, and
Figure 8 is a side view in accordance with Figure 6 of an alternative design of the connection of the teat cups to the robot arm.

In the drawings, corresponding components have been given the same reference numerals. The invention is in no way limited to the embodiments illustrated and described here; they only serve as an illustration of the inventive idea.

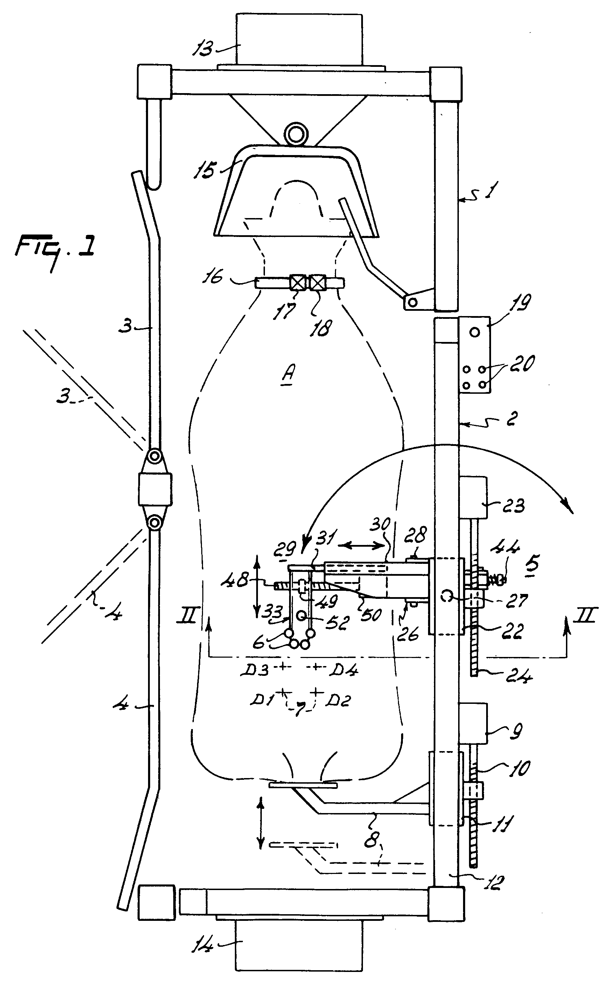

Figure 1 shows a milking parlour in which, inside a railing consisting of the front railing portion 1, the rear railing portion 2 and the railing doors 3 and 4, an animal, in the present case a cow A, is present. The milking parlour includes a milking robot 5, by means of which the teat cups 6 can be connected to the schematically shown teats 7 of the udder of the cow A. For a rough determination of the starting position, the milking robot co-operates with a contacting member 8. The contacting member 8 can be moved with the aid of a stepper motor 9, a threaded spindle 10 connected thereto and a straight guide member 11 to over a horizontal carrier 12 which forms part of the rear railing portion 2. Such a carrier 12 can alternatively be provided against or next to an existing railing. The milking parlour comprises a computer system 13 which controls an automatic feeder. The computer system 13 of the automatic feeder operates independently of a computer system 14 for the milking robot and, each time it detects, identifies and moreover accepts an animal A in the milking parlour, it can deposit a quantity of fodder matched to the animal in a feed trough 15 attached to the front railing portion 1.

The animal is provided with a collar 16, to which two separate indication and information members 17 and 18 are attached. These members each separately supply control signals to the two computer systems 13, 14 and contribute to an independent action of both computers. The milking parlour is further provided with an indicator device 19 for measuring the milk flow coming from a teat 7 of the udder of the animal A. For each of the teats a warning light 20 is present, which lights up when it is determined via a sensor in a teat cup 6 or in the milk line 21 of a cup 6 that the milk flow has stopped or decreased to below a predetermined value. The indicator device 19 may alternatively be designed such that it has two warning lights for the milk flow from each teat 7, one warning light emitting green light during milking and the other one emitting red light when the milk flow from a related teat has decreased to below the preset threshold value. In a still further design, the indicator is an acoustic device in the form of a buzzer.

In the longitudinal direction of the milking parlour, i.e. in the direction of the imaginary line between head and tail of the animal A in the milking parlour, the milking robot 5 is slidably disposed on a horizontal carrier 12 which forms part of the rear railing portion 2. For that purpose, the milking robot 5 comprises a straight guide member 22, a stepper motor 23 driving a threaded spindle 24, which engages the straight guide member 22. The stepper motor 23 is controlled by the computer 14 of the milking robot.

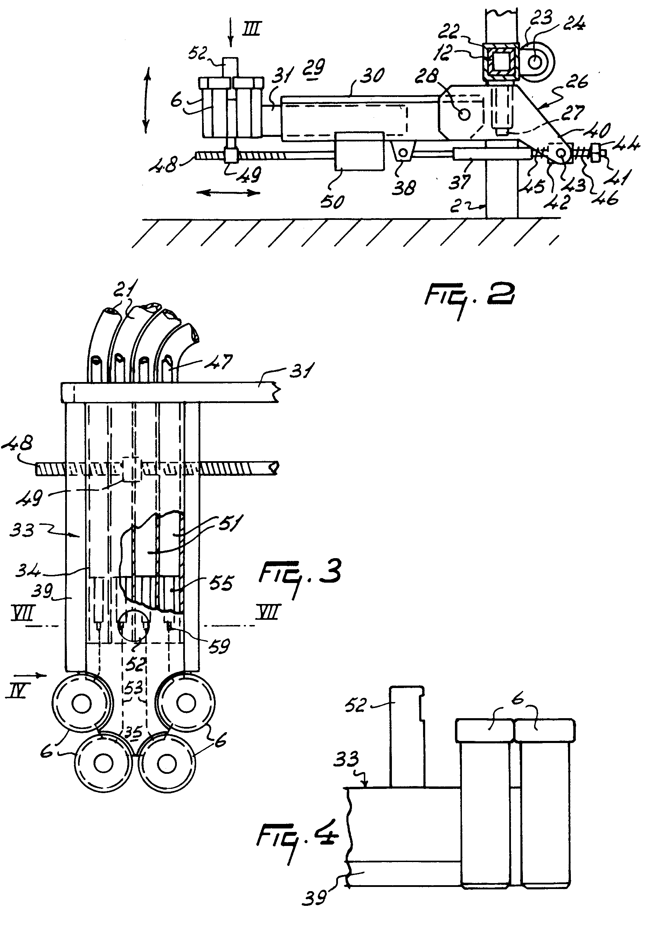

Figure 2 shows at the bottom side of the straight guide member 22 a holder 26 which is arranged pivotably about a vertical shaft 27 connected to the straight guide member 22. A telescopic arm 29, consisting of a rigid portion 30 and a portion 31 slidable therein, is attached to the holder 26 capably of pivoting about a horizontal shaft 28. A carrier member 33 for the teat cups 6 is disposed at a square angle on the end of the slidable arm portion 31. The teat cups 6 are, seen in plan view, arranged in a V-form on the carrier member 33. The carrier member 33 includes a chamber portion 34 and a contacting member portion 35, which in this construction are one integral whole. The slidable arm portion and the teat cups attached thereto can be moved relative to the rigid arm portion 30 with the aid of a threaded spindle 48 which meshes with a threaded element 49 at the bottom side of the carrier member 33. The threaded spindle 48 is driven by a stepper motor 50, which is controlled by the computer system 14 of the milking robot 5.

Relative to the holder 26, the arm 29 is supported and activated pivotably by means of an adjusting cylinder 37. The piston rod thereof acts near the midway point of the rigid arm portion 30 on a horizontal shaft 38 connected between two lugs to the rigid arm portion. The adjusting cylinder 37 is located in the extension of the arm 29 and, in this situation, extends under the end of the vertical shaft 27 to a holder arm 40 of the holder 26. The cylinder portion of the adjusting cylinder 37 is supported relative to the holder arm 40 via a rod 41 which is provided in the extension of the cylinder and is passed through a bore in a block 42, which block 42 is connected pivotably to the holder arm 40 via horizontal stub axles 43. The end of the sliding rod 41, which is provided with thread, is fitted with an adjusting nut 44. Disposed between the cylinder portion of the adjusting cylinder 37 and the block 42 is a pressure spring 45, and a second pressure spring 46 is disposed between the adjusting nut 44 and the block 42.

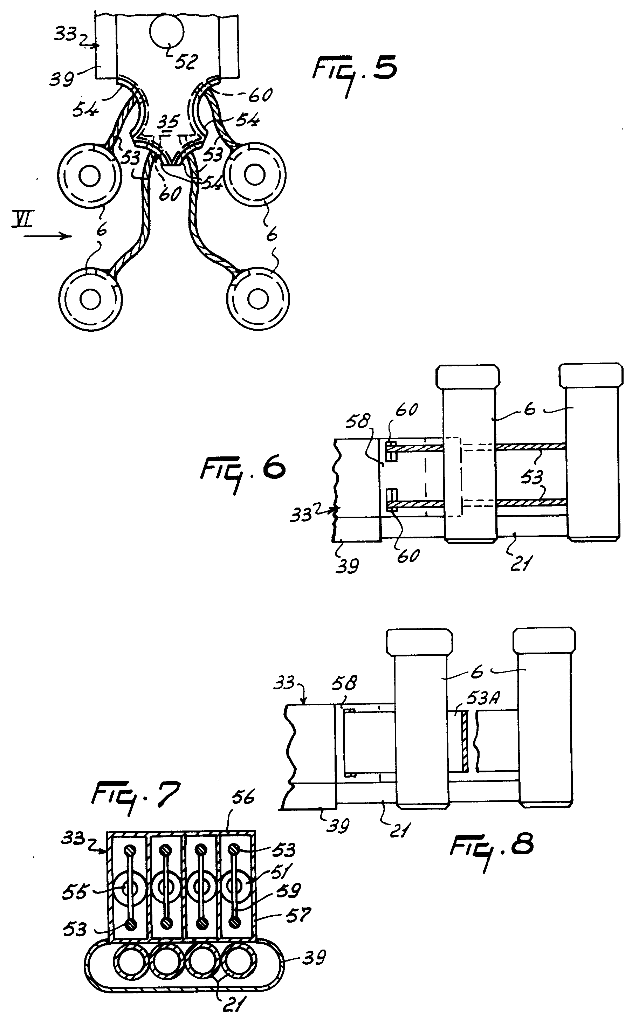

Figures 3 and 4 show a laser device 52 on the carrier member 33. The computer of the milking robot 5 determines the position of the carrier member 33, and consequently the position of the teat cups 6, with the aid of a laser device 52 which is disposed on the carrier member 33, projects to over the teat cups and supplies the computer 14 with signals on the basis of reflected radiation, so that the position of the teats 7 with respect to the carrier member 33 can be determined. The laser device 52 is positioned, seen with respect to the udder of the animal A near the teat cups arranged at the head end of the animal, on an imaginary perpendicular centre line, directed transversely to the arm 29, between the four teat cups. The leading teat cups 6 are spaced apart from each other by a smaller distance than the trailing pair of teat cups, so that each centre of a teat cup 6 indicates a point for the lines of an imaginary arrow tip which, in a plan view, is directed towards the udder.

In the chamber portion 34 of the carrier member 33 there are located, at a square angle to the arm 29, four rigidly arranged cylinders 51 which are pneumatically or hydraulically operable via supply lines 47. Connected to the piston rod 55 of each of the cylinders 51 is a flexible member 53, 53A, which is connected to a teat cup 6. In the rest position, the piston rod 55 of a cylinder 51 is retracted that far that a teat cup 6 is pulled up against a surface of contact 54 on the contacting portion 35 of the carrier member 33.

Figures 5, 6 and 8 show the configuration of the teat cups 6 during milking. In these drawings, the flexible member 53, 53A is not tightened, so that the milked animal A can move free from and to the robot arm 30. A plane of contact 54 has a curvature which at least substantially corresponds to the circumferential curvature of a teat cup 6. A surface of contact 54 is provided on the carrier member 33, which is in the form of an approximately square tube 34. The flexible member 53, 53A is preferably disposed between upright walls of the tube, so that, when it is tightened, a stable contact of the cup 6 with the contacting portion 35 is obtained in all circumstances. In the present embodiment, the surface of contact 54 is constituted by a wall 58 which closes the tube 34 and in which one or a plurality of apertures 60 for the flexible member 53, 53A are made. The apertures 60 are of a conical shape, so that the flexible member 53, 53A can smoothly be pulled through the apertures 60 at different angles. A flexible member 53, 53A is connected to a piston rod 55 via an intermediate member 59. The intermediate member may have the shape of an isosceles triangle, the intermediate member 59 being connected to the piston rod 55 near the apex angle of the said triangular shape. In accordance with a first design as shown in Figure 6, a flexible member can consist of two cables or cords 53 of a suitable flexible material, which cables 53 have one end connected in a lateral direction, i.e. to an upright wall of a teat cup 6. The other end may be attached to the intermediate member 59. In accordance with an alternative design as shown in Figure 8, the flexible member consists of a strip or belt 53A which extends in an upwardly directed plane.

Figure 7 shows, in a cross-sectional view, at the bottom side of the bottom wall 57 of the carrier member 33 a flattened tube 39, through which for the purpose of protection the milk hoses 21 of the teat cups 6 are passed. Such a tube 39, through which also further lines may be passed, prevents the robot arm 29 from being caught on obstacles, if any, by means of its lines and wires.

Although the teat cups 6 can be held against or onto the carrier member 33 by means of the cylinders 51, they can also be held against or onto the carrier member 33 by means of on/off switchable electromagnets. These electromagnets are mounted on the carrier member, e.g. near the surfaces of contact 54, and are individually operable. Particularly, they can be switched on together, while they can be switched off individually. The electromagnets work together with the cylinders 51. The cylinders 51 are able to pull up the teat cups 6 against or onto the carrier member 33 by means of one or more cables 53 or by means of the belt 53A, while the electromagnets are able to hold the teat cups against or onto the carrier member 33. With the aid of the computer 14, control signals can be generated which cause an off-switching of the electromagnet for a relevant teat cup 6 when said teat cup is to be attached to a teat, and an on-switching of said electromagnet when this teat cup has to be uncoupled from the relevant teat and be reconnected to the carrier member 33. The control signals can also provoke an activating of the cylinder 51 of this teat cup 6 for a predetermined time interval as soon as the teat cup 6 has to be uncoupled from said teat. After an electromagnet for a relevant teat cup is switched off, said teat cup is moved upwardly and sucked around a respective teat by means of a partial vacuum generated in said teat cup 6.

The method of operation of the milking robot will now be described hereinafter.

The carrier member has four teat cups 6 which are connected to a carrier member 33 via flexible members 53, 53A. Taken in a direction from the rear, from left to right the teats might be numbered as follows: rear left D1, rear right D2, front left D3 and front right D4.

After the location of the teats 7 has been determined by the laser device 52 or another type of detector, the cups 6 move to the udder of the animal A. The teat cup for teat D1 is, for example, connected first. As soon as this teat cup has been connected to the teat D1, the air pressure in the pneumatic adjusting cylinder 51 of this teat cup stops and the teat cup then becomes freely movable relative to the carrier member 33. If an electromagnet has been used for the connection, the electric current is at that moment switched off from the electromagnet. Thereafter the carrier member 33 automatically moves to teat D2, where the same action occurs. This coupling method is repeated also for the teats D3 and D4. During milking, the teat cups 6 are flexibly connected to the robot arm 29 by means of the milk hoses 21 and the flexible members 53, 53A. This flexible connection is advantageous for the milk yield. The flexibility of the teat cup 6 connected to the teat 7 is still further increased if the robot arm 29 is moved by one or more hydraulic or pneumatic cylinders and if the pressure on the oil or of the air in the cylinders, which determine the location of the robot arm, is removed. Very advantageously, the connected teat cups 6 can also move in all directions in this manner.

In addition, the free motion of a connected teat cup 6 is promoted by the light and possibly flexible material, of which the carrier member 33 and the robot arm 29 have been made. The weight of this material is low and the mass forces are low.

When a teat 7 does not or practically not produce milk any more, the underpressure in the teat cup 6 automatically disappears and simultaneously or substantially simultaneously the flexible members 53, 53A pull the teat cup 6 into its seat, i.e. its surface of contact 54, at the carrier member 33. This rapid drop of the underpressure in the teat cup 6 and the withdrawal of the teat cup are beneficial to a low somatic cell count of the milk. The risk of illnesses, such as mastitis, is reduced thereby and milking is more agreeable to the animal. After all the teats have been milked, the robot arm rotates through approximately 180° to a position outside the milking station and the cow can leave the milking parlour.

A computer 13, which controls the feeding system and makes any further information available, is disposed near the feed trough. This computer 13 can, for example, control the quantity of fodder served to the cow in the feed trough. The cow has a collar 16 which forms part of cow-identification means. Two indication-information members 17, 18 are attached to the collar 16 of the cow A. The one information member co-operates with the computer-controlled feeding system. The other information member co-operates with the computer 14, which is provided near the rear side of the cow A and manages the process control of the milking robot 5. When the feeding system and the milking system comprising the milking robot 5 and the computer 14, are mounted completely or partly separately, the advantage is obtained that supplies and repair operations of the individual systems are easier to perform and an automatic milking system can be used in a simple manner in addition to an existing feeding system. The cow-identification means are provided with a first microprocessor unit in which the relevant data for the fodder supply of an animal to be milked is stored, a second microprocessor unit in which the relevant data for the milking process of an animal to be milked is stored and with a transceiver system. The indication-information member 17 includes the first microprocessor unit with the transceiver system and is able to communicate with the transceiver system of the computer system for feeding the animal. The indication-information member 18 includes the second microprocessor with the first mentioned transceiver system and is able to communicate with the transceiver system of the computer system for controlling the milking robot 5 and the automatic milking. The pressure springs 45, 46 provided in the robot arm produce a flexible up and down motion, whereby the weight of a teat cup 6 and carrier member 33 is reduced. The up and down motion of the teat cup 6 can, as shown, be effected pneumatically. Furthermore, a stepper motor can adjust the length of the telescopic robot arm 29. The stepper motor structures can be replaced by hydraulic or pneumatic cylinders or suchlike structures. By means of the above-described straight guide members 22, 29 provided along and transversely to the milking parlour and by the pivotal motion about the shaft 28, a teat cup 6, mounted at the end of the robot arm, can be moved upwardly, downwardly and laterally and at the same time in all directions, after activation of the relevant stepper motor and/or adjusting cylinder.

The milking implement can still function adequately if two teats of the cow are adjacent to each other spaced apart by only a few centimetres, e.g. 2 cms, as, for example, the rearmost teat cups D1 and D2 are located in the initial position very closely to each other on their carrier member 33. This arrangement is important for a milking robot 5 which must always operate, also during the night, without any supervision.

The milking implement, provided with a number of teat cups 6 which are connectable to a number of teats 7 of an animal, such as a cow A, is preferably used in a stable with freely moving cows or a similar such accommodation. The milking system comprising the milking robot 5 and the computer 14, and the feeding system can then be of an automatic type and be designed such that the computers 13, 14 controlling the milking system and the feeding system allow a cow to enter the milking parlour, in accordance with the sequence in which she is recorded in the computer.

In addition, the milking system and the feeding system can be automated and designed such that the computers 13, 14 controlling the milking system and the feeding system ensure that a cow which is at the beginning of a lactation period is given priority, as regards her entrance to the milking parlour, over cows which are at the end of the lactation period. Therefore, the implement is provided with register means for registering the lactation period of the animals. Particularly, these register means are forming part of the second microprocessor unit of the cow-identification means, in which microprocessor unit the further relevant data for the milking process of the animal to be milked is stored. The computer system for controlling the milking robot comprises a special programme to ensure that the animals which are at the beginning of a lactation period are given priority for entering the milking parlour over animals which are not at the beginning of the lactation period.

The milking system and the feeding system may also be of such an automated construction and so designed that the computers 13, 14 controlling the milking system and the feeding system allow cows A into the milking parlour in accordance with serial numbers such as A1, A2, A3, A4, A5 etc., assigned to the cows A.

It is furthermore possible to milk a cow A in a stable with freely moving cows or a similar accommodation automatically, independently of an optional recording in a computer 14 controlling the system of the instant at which each cow was milked and independently of a predetermined period of time elapsed since the cow was milked last.

The invention is not limited to the features described in the foregoing with reference to the accompanying drawings, but also relates to all the details which have not been described but are shown in the drawings and defined in the claims. The invention also relates to all sorts of modifications of the embodiment, of course being within the protective scope of the accompanying claims.

## Claims

1. An implement for automatically milking an animal, comprising a milking robot (5) with a carrier member (33) adapted to carry four teat cups (6) which are automatically connectable to the teats of an animal, characterized in that the carrier member (33) comprises a separate chamber (39) inside which substantially over the length of the carrier member (33) milk hoses (21) connected to said teat cups (6) are mounted.

2. An implement as claimed in claim 1, characterized in that the milk hoses (21), passing through the carrier member (33), extend therein in a substantially horizontal plane adjacent to each other and behind the corresponding teat cups (6).

3. An implement as claimed in claim 1 or 2, characterized in that a milking hose (21) is connected to an opening in the side face of the teat cup (6), which opening is located at approximately the same height as the separate chamber (39) when the teat cups (6) are in the position in which they are supported by the carrier member (33).

4. An implement as claimed in claim 3, characterized in that the teat cups (6) are supported by the carrier member (33) by pulling them up against or on this carrier member (33), while in the pulled position the milk hoses (21) connected to the teat cups (6) pass substantially horizontally through the separate chamber (39).

5. An implement as claimed in any one of the preceding claims, characterized in that the chamber (39) is located underneath the carrier member (33).

6. An implement as claimed in any one of the preceding claims, characterized in that the remaining part (34) of the carrier member (33) comprises four cylinders for pulling up the teat cups (6) against or on the carrier member (33) by means of one or more cables (53) or by means of a belt (53A), said cables (53) or belt (53A) being connected to each of the teat cups (6).

7. An implement as claimed in claim 6, characterized in that the remaining part (34) of the carrier member (33) is divided into four compartments, in each of which compartments a cylinder (51) is provided for pulling up a teat cup (6).

8. An implement as claimed in claim 6 or 7, characterized in that a cylinder (51) is activated after a sensor, provided in the relevant teat cup (6) or in the milk hose (21) connected thereto has indicated that the milk flow in the teat cup (6) has stopped or has fallen below to a predetermined value.

9. An implement as claimed in claim 8, characterized in that a cylinder (51) is activated immediately after the partial vacuum in the relevant teat cup (6) is removed and after that therefore the milk flow has already stopped or already has fallen below to a predetermined value.

10. An implement as claimed in claim 9, characterized in that means are provided to adjust the time interval between the moment on which the milk flow has stopped or has fallen below to a predetermined value and the moment on which the vacuum is removed.

11. An implement as claimed in any one of claims 8 to 10, characterized in that signaling means are provided to indicate that the milk flow in a teat cup (6) has stopped or has fallen below to a predetermined value.

12. An implement as claimed in any one of the preceding claims, characterized in that the carrier member (33) is provided with surfaces of contact (54) which extend at the side of and around the end portion of the carrier member (33) in substantially vertical direction, against which surfaces of contact (54) the teat cups (6) can be pulled up in a, seen in plan view, V-formed configuration.

13. An implement as claimed in claim 12, characterized in that the surfaces of contact (54) for the teat cups (6) to be connected to the hindmost teats are located at the end portion of the carrier member (33) and the surfaces of contact (54) for the teat cups (6) to be connected to the foremost teats are located at the side portions of the carrier member (33), whereby the distance between the first mentioned surfaces of contact is smaller than the distance between the latter surfaces of contact.

14. An implement as claimed in claim 12 or 13, characterized in that the surfaces of contact (54) have, seen in plan view, a curvature which corresponds with that of the teat cups (6).

15. An implement as claimed in any one of claims 12 to 14, characterized in that a laser device (52) for determining the position of the teats is mounted behind the open space between the in V-form arranged teat cups (6) on the carrier member (33).

## Patentansprüche

1. Vorrichtung zum automatischen Melken eines Tieres, mit einem Melkroboter (5) und einem Träger (33) zum Tragen von vier Zitzenbechern (6), die automatisch an die Zitzen eines Tieres anzuschließen sind,
dadurch gekennzeichnet, daß der Träger (33) eine separate Kammer (39) hat, innerhalb der mit den Zitzenbechern (6) verbundene Milchschläuche (21) im wesentlichen über die gesamte Länge des Trägers (33) angeordnet sind.

2. Vorrichtung nach Anspruch 1,
dadurch gekennzeichnet, daß die sich durch den Träger (33) erstreckenden Milchschläuche (21) innerhalb des Trägers in einer im wesentlichen horizontalen Ebene nebeneinander und hinter den zugehörigen Zitzenbechern (6) angeordnet sind.

3. Vorrichtung nach Anspruch 1 oder 2,
dadurch gekennzeichnet, daß ein Milchschlauch (21) mit einer in der Seitenwand des Zitzenbechers (6) ausgebildeten Öffnung verbunden ist, die etwa in derselben Höhe wie die separate Kammer (39) liegt, wenn sich die Zitzenbecher (6) in einer von dem Träger (33) abgestützten Lage befinden.

4. Vorrichtung nach Anspruch 3,
dadurch gekennzeichnet, daß die Zitzenbecher (6) von dem Träger (33) durch Heranziehen gegen oder an diesen Träger (33) abgestützt sind, wobei in angezogenem Zustand der Zitzenbecher (6) die mit ihnen verbundenen Milchschläuche (21) im wesentlichen horizontal die separate Kammer (39) durchlaufen.

5. Vorrichtung nach einem der vorhergehenden Ansprüche,
dadurch gekennzeichnet, daß die Kammer (39) an der Unterseite des Trägers (33) angeordnet ist.

6. Vorrichtung nach einem der vorhergehenden Ansprüche,
dadurch gekennzeichnet, daß der übrige Teil (34) des Trägers (33) vier Arbeitszylinder enthält, um die Zitzenbecher (6) mittels eines oder mehrerer Seile (53) oder eines Riemens (53A) gegen oder an den Träger (33) heranzuziehen, wobei die Seile (53) oder der Riemen (53A) mit jedem der Zitzenbecher (6) verbunden sind.

7. Vorrichtung nach Anspruch 6,
dadurch gekennzeichnet, daß der übrige Teil (34) des Trägers (33) in vier Kammern unterteilt und in jeder Kammer ein Arbeitszylinder (51) zum Anziehen eines Zitzenbechers (6) angeordnet ist.

8. Vorrichtung nach Anspruch 6 oder 7,
dadurch gekennzeichnet, daß ein Arbeitszylinder (51) aktiviert wird, nachdem ein Sensor, der in dem zugehörigen Zitzenbecher (6) oder in dem daran angeschlossenen Milchschlauch (21) angeordnet ist, angezeigt hat, daß der Milchstrom in dem Zitzenbecher (6) versiegt ist oder einen vorgegebenen Wert unterschritten hat.

9. Vorrichtung nach Anspruch 8,
dadurch gekennzeichnet, daß ein Arbeitszylinder (51) aktiviert wird, unmittelbar nachdem der Unterdruck in dem zugehörigen Zitzenbecher (6) abgeschaltet wurde und der Milchstrom deshalb bereits versiegt ist oder einen vorgegebenen Wert unterschritten hat.

10. Vorrichtung nach Anspruch 9,
dadurch gekennzeichnet, daß eine Einrichtung vorgesehen ist zum Einstellen des Zeitintervalls zwischen dem Zeitpunkt, zu dem der Milchstrom versiegt ist oder einen vorgegebenen Wert unterschritten hat, und dem Zeitpunkt des Abschaltens des Vakuums.

11. Vorrichtung nach einem der Ansprüche 8 bis 10,
dadurch gekennzeichnet, daß eine Anzeigeeinrichtung vorhanden ist, die anzeigt, daß der Milchstrom in einem Zitzenbecher (6) versiegt ist oder einen vorgegebenen Wert unterschritten hat.

12. Vorrichtung nach einem der vorhergehenden Ansprüche,
dadurch gekennzeichnet, daß der Träger (33) Anlageflächen (54) aufweist, die seitlich und am Ende des Trägers (33) in im wesentlichen vertikaler Richtung angeordnet sind, und gegen die die Zitzenbecher (6) in - in Draufsicht - V-förmiger Anordnung zu ziehen sind.

13. Vorrichtung nach Anspruch 12,
dadurch gekennzeichnet, daß die Anlageflächen (54) für die an die hinteren Zitzen anzuschließenden Zitzenbecher (6) am Endteil des Trägers (33) und die Anlageflächen (54) für die an die vorderen Zitzen anzuschließenden Zitzenbecher (6) an den Seitenteilen des Trägers (33) ausgebildet sind, wobei der Abstand zwischen den ersten beiden Anlageflächen kleiner ist als der Abstand zwischen den letzten beiden Anlageflächen.

14. Vorrichtung nach Anspruch 12 oder 13,
dadurch gekennzeichnet, daß die Anlageflächen (54) in Draufsicht eine Krümmung aufweisen, die der Krümmung der Zitzenbecher (6) entspricht.

15. Vorrichtung nach einem der Ansprüche 12 bis 14,
dadurch gekennzeichnet, daß ein Laser (52) zum Bestimmen der Position der Zitzen hinter dem offenen Raum zwischen den V-förmig angeordneten Zitzenbechern (6) auf dem Träger (33) angeordnet ist.

## Revendications

1. Dispositif pour traire automatiquement un animal, comprenant un robot trayeur (5) avec un organe porteur (33) adapté pour porter quatre godets de trayons (6) pouvant être reliés automatiquement aux trayons d'un animal,
**caractérisé** en ce que l'organe porteur (33) comprend une chambre séparée (39) dans laquelle sont montés, pratiquement sur toute la longueur de l'organe porteur (33), des tuyaux à lait (21) reliés auxdits godets de trayons (6).

2. Dispositif selon la revendication 1, caractérisé en ce que les tuyaux à lait (21) passant à travers l'organe porteur (33) s'y étendent dans un plan sensiblement horizontal en étant adjacents l'un à l'autre et derrière les godets de trayons (6) correspondants.

3. Dispositif selon la revendication 1 ou 2, caractérisé en ce qu'un tuyaux à lait (21) est relié à une ouverture dans la face latérale du godet de trayon (6), laquelle ouverture est située approximativement à la même hauteur que la chambre séparée (39) quand les godets de trayons (6) sont dans la position où ils sont supportés par l'organe porteur (33).

4. Dispositif selon la revendication 3, caractérisé en ce que les godets de trayons (6) sont supportés par l'organe porteur (33) en étant tirés contre cet organe porteur (33) ou sur lui, tandis que, dans la position tirée, les tuyaux à lait (21) reliés aux godets de trayons (6) traversent, sensiblement horizontalement, la chambre séparée (39).

5. Dispositif selon l'une quelconque des revendications précédentes, caractérisé en ce que la chambre(39) est située sous l'organe porteur (33).

6. Dispositif selon l'une quelconque des revendications précédentes, caractérisé en ce que la partie restante (34) de l'organe porteur (33) comprend quatre vérins pour tirer les godets de trayons (6) contre l'organe porteur (33) ou sur lui au moyen d'un ou plusieurs câbles (53) ou d'une courroie (53A), ces câbles (53) ou cette courroie (53A) étant reliés à chacun des godets de trayons (6).

7. Dispositif selon la revendication 6, caractérisé en ce que la partie restante (34) de l'organe porteur (33) est divisée en quatre compartiments dans chacun desquels est prévu un vérin (51) pour tirer un godet de trayon (6).

8. Dispositif selon la revendication 6 ou 7, caractérisé en ce qu'un vérin (51) est actionné après qu'un capteur prévu dans le godet de trayon (6) correspondant ou dans le tuyau à lait (21) relié à ce godet a indiqué que le débit de lait dans le godet de trayon (6) a cessé ou qu'il est tombé en dessous d'une valeur prédéterminée.

9. Dispositif selon la revendication 8, caractérisé en ce qu'un vérin (51) est actionné immédiatement après que le vide partiel dans le godet de trayon (6) correspondant est cassé et après que, par conséquent, le débit de lait a déjà cessé ou est déjà tombé en dessous d'une valeur prédéterminée.

10. Dispositif selon la revendication 9, caractérisé en ce que des moyens sont prévus pour régler le délai entre le moment de l'arrêt du débit de lait ou de sa chute en dessous d'une valeur prédéterminée, et le moment où le vide est coupé.

11. Dispositif selon l'une quelconque des revendications 8 à 10, caractérisé en ce que des moyens de signalisation sont prévus pour indiquer que le débit de lait dans un godet de trayon (6) a cessé ou est tombé en dessous d'une valeur prédéterminée.

12. Dispositif selon l'une quelconque des revendications précédentes, caractérisé en ce que l'organe porteur (33) est muni de surfaces de contact (54) qui s étendent sur le côté de la partie d'extrémité de l'organe porteur (33) et autour d'elle, en sens sensiblement vertical, les godets de trayons (6) pouvant être tirés contre ces surfaces de contact (54) selon une configuration en V, en étant vus en plan.

13. Dispositif selon la revendication 12, caractérisé en ce que les surfaces de contact (54) pour les godets de trayons (6) à relier aux trayons postérieurs sont situées sur la partie d'extrémité de l'organe porteur (33) et les surfaces de contact (54) pour les godets de trayons (6) à relier aux trayons antérieurs sont situées sur les parties latérales de l'organe porteur (33), la distance entre les surfaces de contact mentionnées en premier étant moindre que la distance entre les surfaces de contact suivantes.

14. Dispositif selon la revendication 12 ou 13, caractérisé en ce que les surfaces de contact (54) ont, en étant vues en plan, une courbure qui correspond à celle des godets de trayons (6).

15. Dispositif selon l'une quelconque des revendications 12 à 14, caractérisé en ce qu'un dispositif à laser (52) pour déterminer la position des trayons est monté derrière l'espace ouvert entre les godets de trayons (6) disposés en forme de V sur l'organe porteur (33).
